# EUROPEAN PATENT SPECIFICATION

(11) **EP 1 795 472 B1**
(45) Date of publication and mention of the grant of the patent: **28.03.2012**
(21) Application number: 06025457.0
(22) Date of filing: 08.12.2006
(51) Int. Cl.: B41J 13/02, B65H 3/06, B65H 5/06, B65H 27/00, B65H 3/52, C08G 18/10, C08G 18/42

(54) **Anomalous-noise-suppressed roller**
Walze zum Unterdrücken abnormaler Geräusche
Rouleau pour supprimer un bruit anormal

(30) Priority: 08.12.2005 JP 2005355421; 01.12.2006 JP 2006325655
(43) Date of publication of application: 13.06.2007
(73) Proprietor: Synztec Co., Ltd., Shinagawa-ku Tokyo 140-0013 (JP)
(72) Inventor: Sakatani, Mika, Yokohama-shi Kanagawa 230-0003 (JP)
(74) Representative: Strehl Schübel-Hopf & Partner

(56) References cited:
- EP-A- 0 401 886
- US-A- 4 287 649
- US-A- 6 056 230

## Description

### BACKGROUND OF THE INVENTION

### Field of the Invention

The present invention relates to a roller which is designed not to produce anomalous noise (hereinafter referred to as "anomalous-noise-suppressed roller"), the roller comprising polyurethane foam, and, more particularly, to an anomalous-noise-suppressed roller suitably employed as a feed/transport roller (i.e., a roller for feeding or transporting sheet material) and a sheet-separation roller (i.e., a roller for separating paper sheets) such as a reverse roller, for use in a variety of OA (office automation) machines such as copiers, facsimiles, and printers.

### Background Art

Conventionally, feed/transport rollers for use in a variety of OA machines have been required to have excellent sheet transportation capacity and wear resistance. In recent years, attention has been drawn to a critical problem, a certain type of peculiar noise attributed to vibration caused by friction between a paper sheet and a roller during feeding of the paper sheet.

Among the rollers used in an OA machine, a sheet-separation roller used for preventing stacking of paper sheets in a sheet feed section is generally formed of polyurethane foam, from the viewpoint of wear resistance and staining prevention with respect to an original sheet. When the sheet-separation roller is slid while being in contact with a sheet feed belt after completion of separation of sheets, friction- or vibration-related noises (such as a buzzing noise and/or a squeaky sound; hereinafter referred to anomalous noises) are generated.

Conventionally, a variety of countermeasures have been taken for preventing such anomalous noises. The present applicant previously proposed a feed/transport roller which has a low degree of hardness but excellent durability, which is not affected by paper dust, so as to maintain a consistent friction coefficient, and which is provided so as to prevent anomalous noises (see Japanese Patent Application Laid-Open (kokai) No. 2003-165635), and an anomalous-noise-suppressed roller which prevents generation of anomalous noise and staining of sheets of paper (see Japanese Patent Laid-Open (kokai) Nos. 2005-059279 and 2005-154147). However, these countermeasures against anomalous noise generation are effective for rollers having a relatively large thickness, but would not be satisfactory for rollers having a small thickness, in terms of noise generation, durability, and permanent compressive strain. Another roller which is considered as closest prior art is disclosed in US 6, 056, 230.

### SUMMARY OF THE INVENTION

The present inventors have accomplished the present invention in view of the foregoing. Thus, an object of the present invention is to provide an anomalous-noise-suppressed roller having excellent durability and small thickness. The roller thickness is defined as [(outer roller diameter) - (inner roller diameter)]/2.

Accordingly, in a first aspect of the present invention, there is provided an anomalous-noise-suppressed roller comprising polyurethane foam, wherein
the polyurethane foam is produced from a prepolymer derived from a caprolactone diol; a chain-extender formed of a 2-functional diol; and a cross-linking agent formed of a short-chain polyol having three or more functionalities;
the cross-linking agent is employed in an amount of 10% by mass or more and less than 20% by mass, with respect to the total amount of the chain-extender and the cross-linking agent;
the polyurethane foam exhibits a permanent compressive strain, as determined under 25% compression at 70°C for 22 hours, of 20% or less, and an Asker C hardness of 60 to 70°; and
the roller has a thickness of 4 mm or less.

In a second aspect of the present invention, the anomalous-noise-suppressed roller as recited in the first aspect may be molded through mechanical frothing.

The present invention successfully provides an anomalous-noise-suppressed roller having a small thickness but exhibiting excellent durability.

### BRIEF DESCRIPTION OF THE DRAWINGS

FIG. 1 is a schematic view of an anomalous noise tester employed in Test Example 1.
FIG. 2 is a schematic view of a durability tester employed in Test Example 2.

### DETAILED DESCRIPTION OF PREFERRED EMBODIMENTS

The anomalous-noise-suppressed roller of the present invention comprising polyurethane foam is produced from a prepolymer derived from a caprolactone diol; a chain-extender formed of a 2-functional diol; and a cross-linking agent formed of a short-chain polyol having three or more functionalities. The cross-linking agent is employed in an amount of 10% by mass or more and less than 20% by mass, with respect to the total amount of the chain-extender and the cross-linking agent, and the polyurethane foam exhibits a permanent compressive strain, as determined under 25% compression at 70°C for 22 hours, of 20% or less, and an Asker C hardness of 60 to 70°. The roller has a thickness of 4 mm or less.

When a thin roller is produced from a polyurethane foam which has been produced from a base prepolymer employing a caprolactone diol, a chain-extender, and a cross-linking agent, with the mass ratio of the chain-extender to the cross-linking agent being adjusted to a predetermined value, the produced roller has excellent durability and does not generate anomalous noise.

The anomalous-noise-suppressed roller of the present invention is formed of a polyurethane foam obtained from a prepolymer with a chain-extender and a cross-linking agent. The polyurethane foam generates anomalous noise, when employed as a conventional thick roller, and thus, has been conceived to be unusable as an anomalous-noise-suppressed roller. Therefore, the roller of the invention is suited for a thin roller.

The polyurethane foam of the invention is produced in such a way that the cross-linking agent is employed in an amount of 10% by mass or more and less than 20% by mass, preferably 10% by mass or more and less than 15% by mass, with respect to the total amount of the chain-extender and the cross-linking agent. In other words, the polyurethane foam is produced in such a way that the ratio by mass of chain-extender to cross-linking agent is adjusted to 90 : 10 to 80 : 20 (excluding 80 : 20), preferably 90 : 10 to 85 : 15. By virtue of the amount of cross-linking agent falling within the above ranges, the polyurethane becomes rich in hard segments, whereby mechanical strength thereof increases. When a roller having a thickness of 4 mm or less is produced from such a polyurethane, vibration-related anomalous noise is prevented. In addition, the polyurethane foam of the invention exhibits a permanent compressive strain, as determined under 25% compression at 70°C for 22 hours, of 20% or less, and an Asker C hardness of 60 to 70°. When the cross-linking agent is used in an amount less than the above-specified level, the formed polyurethane exhibits a permanent compressive strength of 20% or more. A roller formed from such a polyurethane is not preferred, since deformation of the roller is difficult to restore. When the cross-linking agent is used in an amount in excess of the above-specified level, a roller having a thickness of 4 mm or less cannot absorb vibration, and, as a result, anomalous noise cannot be prevented.

As used herein, the "permanent compressive strain" is determined in accordance with JIS K6262. Specifically, a sample roller (outer diameter φ: 37 mm, inner diameter φ: 17 mm, and width: 12.5 mm) is produced from polyurethane foam having the aforementioned composition, and permanent compressive strain of the sample is determined as under 25% compression (along the axis direction of the roller) at 70°C for 22 hours.

The polyurethane foam of the invention is produced through the prepolymer method employing polyε-caprolactone diol, polyisocyanate, a chain-extender, and a cross-linking agent. More specifically, polyε-caprolactone diol is reacted with an excess amount of polyisocyanate, to thereby form a caprolactone-based prepolymer having unreacted isocyanate groups. Subsequently, the remaining isocyanate groups of the caprolactone-based prepolymer are reacted with the chain-extender and the cross-linking agent, to thereby produce a polyurethane.

The polyε-caprolactone polyol employed for producing the caprolactone-based prepolymer may be a polyol having a number average molecular weight of 1,000 to 4,000. Examples of the polyisocyanate compound include 2,6-toluene diisocyanate (TDI), 4,4'-diphenylmethane diisocyanate (MDI), p-phenylene diisocyanate (PPDI), 1,5-naphthalene diisocyanate (NDI), and 3,3-dimethyldiphenyl-4,4'-diisocyanate (TODI). Among them, MDI is preferred from the viewpoint of chemical performance and cost.

The chain-extender is a 2-functional short-chain diol having a number average molecular weight of, for example, 80 to 160. In one embodiment, at least one of propanediol (PD) and butane diol (BD) is used. Needless to say, two or more such diol species may also be employed. A typical propanediol is 1,3-propanediol, and a typical butanediol is 1,4-butanediol. From the viewpoint of chemical performance and cost, 1,3-propanediol and 1,4-butanediol are preferred. However, no particular limitation is imposed on the diol species.

The cross-linking agent is a short-chain polyol having three or more functionalities; e.g., a short-chain polyol having a number average molecular weight of 800 or less, preferably 500 or less. Examples of the polyol include trimethylolethane (TME) and trimethylolpropane (TMP). At least one of the two species is employed.

The anomalous-noise-suppressed roller of the present invention may be produced through mixing the aforementioned raw materials at predetermined proportions and expansion molding of the mixture. A predetermined additive may be added to the raw materials. Examples of the additive include a foaming agent, a foaming controller, an antihydrolysis agent, and an antioxidant. Foaming may be performed by use of a foaming agent. Alternatively, foaming may also be performed through mechanical frothing in which foaming is mechanically carried out in the presence of a foaming controller.

The anomalous-noise-suppressed roller of the present invention is formed from the raw materials mixed at predetermined proportions. Therefore, anomalous noise is not generated, when the roller has a thickness of 4 mm or less. In addition, the roller exhibits excellent durability and permanent compressive strain.

### EXAMPLES

The present invention will next be described in more detail by way of examples, which should not be construed as limiting the invention thereto. Unless otherwise specified, the unit "part" means part by mass.

### Example 1

To a caprolactone-based polyurethane prepolymer (RV 2600: product of Dainippon Ink and Chemicals Inc.) (100 parts), a foaming controller and an antihydrolysis agent were added. The mixture was agitated for five minutes through mechanical frothing. Subsequently, a hardening agent a mixture (7.3 parts) of 1,4-butanediol (chain-extender) and trimethylolpropane (TMP) (cross-linking agent) (90 : 10)-and water (0.05 parts) were added to the agitated mixture, followed by stirring through mechanical frothing for one minute. The stirred mixture was cast into a mold at 120°C such that the foamed product density (mass of the product in a mold/volume of the mold) was adjusted to 0.4 g/cm³, and allowed to react for 50 minutes for curing, to thereby form a roller-shape product. The roller product was polished and cut by means of a cut-off tool, thereby forming a foamed roller of Example 1 (outer diameter φ: 23 mm, inner diameter φ: 17 mm, and width: 24 mm). The permanent compressive strain (CS) of the product was found to be 15%.

The permanent compressive strain was determined in accordance with JIS K6262 by use of a sample roller (outer diameter φ : 37 mm, inner diameter φ: 17 mm, and width: 12.5 mm), which had been produced from the same polyurethane and through the same method, under 25% compression at 70°C for 22 hours.

### Example 2

The procedure of Example 1 was repeated, except that the foamed product density was adjusted to 0.5 g/cm³, to thereby produce a foamed roller of Example 2. The permanent compressive strain of the product was found to be 15%.

### Example 3

The procedure of Example 1 was repeated, except that the foamed product density was adjusted to 0.6 g/cm³, to thereby produce a foamed roller of Example 3. The permanent compressive strain of the product was found to be 16%.

### Example 4

The procedure of Example 3 was repeated, except that the roller dimensions were changed to be an outer diameter φ of 25 mm, an inner diameter φ of 17 mm, and a width of 24 mm, to thereby produce a foamed roller of Example 4. The permanent compressive strain of the product was found to be 16%.

### Example 5

The procedure of Example 2 was repeated, except that the ratio by mass of chain-extender to cross-linking agent was changed to 85 : 15, and the roller dimensions were changed to be an outer diameter φ of 25 mm, an inner diameter φ of 17 mm, and a width of 24 mm, to thereby produce a foamed roller of Example 5. The permanent compressive strain of the product was found to be 15%.

### Comparative Example 1

The procedure of Example 1 was repeated, except that the ratio by mass of chain-extender to cross-linking agent was changed to 60 : 40, to thereby produce a foamed roller of Comparative Example 1. The permanent compressive strain of the product was found to be 3%.

### Comparative Example 2

The procedure of Example 1 was repeated, except that the ratio by mass of chain-extender to cross-linking agent was changed to 60 : 40, and the roller dimensions were changed to be an outer diameter φ of 29 mm, an inner diameter φ of 17 mm, and a width of 24 mm, to thereby produce a foamed roller of Comparative Example 2. The permanent compressive strain of the product was found to be 3%.

### Comparative Example 3

The procedure of Example 2 was repeated, except that the ratio by mass of chain-extender to cross-linking agent was changed to 60 : 40, and the roller dimensions were changed to be an outer diameter φ of 29 mm, an inner diameter φ of 17 mm, and a width of 24 mm, to thereby produce a foamed roller of Comparative Example 3. The permanent compressive strain of the product was found to be 3%.

### Comparative Example 4

The procedure of Example 3 was repeated, except that the ratio by mass of chain-extender to cross-linking agent was changed to 60 : 40, to thereby produce a foamed roller of Comparative Example 4. The permanent compressive strain of the product was found to be 4%.

### Comparative Example 5

The procedure of Example 2 was repeated, except that the ratio by mass of chain-extender to cross-linking agent was changed to 70: 30, to thereby produce a foamed roller of Comparative Example 5. The permanent compressive strain of the product was found to be 8%.

### Comparative Example 6

The procedure of Example 2 was repeated, except that the ratio by mass of chain-extender to cross-linking agent was changed to 80 : 20, to thereby produce a foamed roller of Comparative Example 6. The permanent compressive strain of the product was found to be 14%.

### Comparative Example 7

The procedure of Example 1 was repeated, except that the roller dimensions were changed to be an outer diameter φ of 29 mm, an inner diameter φ of 17 mm, and a width of 24 mm, to thereby produce a foamed roller of Comparative Example 7. The permanent compressive strain of the product was found to be 15%.

### Comparative Example 8

The procedure of Example 2 was repeated, except that the ratio by mass of chain-extender to cross-linking agent was changed to 95 : 5, to thereby produce a foamed roller of Comparative Example 8. The permanent compressive strain of the product was found to be 26%.

### Comparative Example 9

The procedure of Example 2 was repeated, except that no cross-linking agent was used, to thereby produce a foamed roller of Comparative Example 9. The permanent compressive strain of the product was found to be 55%.

### Test Example 1: Anomalous noise test

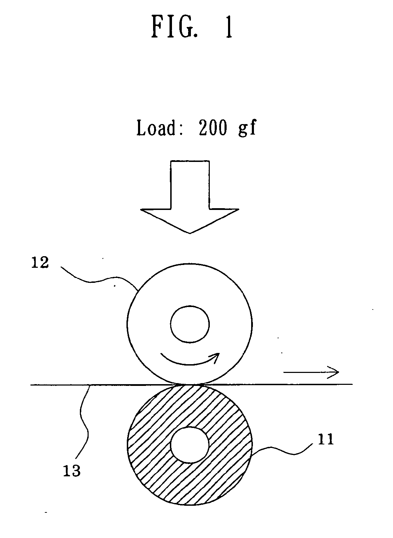

Each of the foamed rollers of the Examples and Comparative Examples was tested. Specifically, as shown in FIG. 1, a free roller 12 which was rotatably sustained was pressed against an affixed foamed roller 11 at a predetermined load of 200 gf. A sheet of paper (PPC normal paper sheet) 13 was inserted therebetween and drawn at a speed of 50 mm/sec. Generation of anomalous noise when the paper sheet 13 was drawn was checked by the human ear. The measurement was carried out under ambient conditions (at 23°C and 50% RH). The results are shown in Table 1. Test Example 2: Durability test

Each of the foamed rollers of the Examples and Comparative Examples was subjected to a durability test employing abrasive cloth so as to apply a heavy load to the roller. The outer diameter of the roller was measured before and after the test, and the difference between two diameter values was calculated.

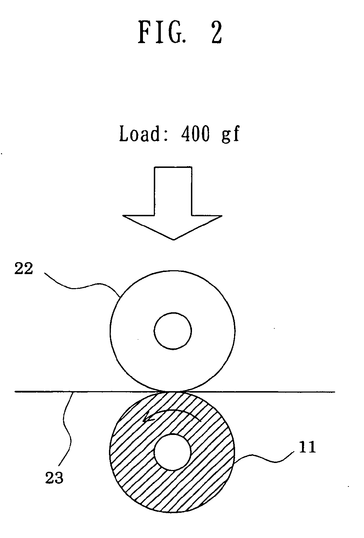

Specifically, as shown in FIG. 2, a free roller 22 which was rotatably sustained was pressed against an affixed foamed roller 11 at a predetermined load of 400 gf. Abrasive cloth (abrasive cloth A-400, product of KOYO-SHA CO.,LTD) 23 was inserted therebetween, and the foamed roller 11 was rotated at 500 rpm. The rotational rate of the roller was modified in accordance with the foamed product density of the roller tested. When the foamed product densities were 0.4 g/cm³, 0.5 g/cm³, and 0.6 g/cm³, the rotational rate was adjusted to 30,000 rpm, 50,000 rpm, and 80,000 rpm, respectively.

Table 1 shows the results. The wear amount in outer diameter was evaluated on the basis of the following ratings: O : <0.15 mm, Δ: ≥ 0.15 mm and <0.3 mm, and X: ≥0.3 mm.

The outer diameter was measured by means of a laser measuring apparatus at three sites along the direction of the roller axis; i.e., at sites 5 mm from the respective ends of the roller and at the midpoint of the roller. These three measurements were averaged. The wear amount in outer diameter is defined as the difference between the outer diameter of the roller before and after the test.

**Table 1**

| | Chain-extender /cross-linking agent | Foamed product density (g/cm³) | CS (%) | Roller thickness (mm) | Anomalous noise (squeaky sound) | Hardness Asker C (°) | Durability test |
|---|---|---|---|---|---|---|---|
| Ex.1 | 90/10 | 0.4 | 15 | 3.0 | No | 61 | O |
| Ex.2 | 90/10 | 0.5 | 15 | 3.0 | No | 64 | O |
| Ex.3 | 90/10 | 0.6 | 16 | 3.0 | No | 70 | O |
| Ex. 4 | 90/10 | 0.6 | 16 | 4.0 | No | 70 | O |
| Ex.5 | 85/15 | 0.5 | 15 | 4.0 | No | 63 | O |
| Comp. Ex. 1 | 60/40 | 0.4 | 3 | 3.0 | Yes | 46 | X |
| Comp. Ex. 2 | 60/40 | 0.4 | 3 | 6.0 | No | 46 | X |
| Comp. Ex. 3 | 60/40 | 0.5 | 3 | 6.0 | No | 52 | X |
| Comp. Ex. 4 | 60/40 | 0.6 | 4 | 3.0 | Yes | 58 | X |
| Comp. Ex. 5 | 70/30 | 0.5 | 8 | 3.0 | No | 60 | Δ |
| Comp. Ex. 6 | 80/20 | 0.5 | 14 | 3.0 | No | 62 | Δ |
| Comp. Ex. 7 | 90/10 | 0.4 | 15 | 6.0 | Yes | 61 | O |
| Comp. Ex. 8 | 95/5 | 0.5 | 26 | 3.0 | No | 69 | O |
| Comp. Ex. 9 | 100/0 | 0.5 | 55 | 3.0 | No | 74 | O |

As is clear from Table 1, all the rollers produced in the examples generated no anomalous noise in the anomalous noise test. In the durability test, the rollers of the examples exhibited a wear amount in outer diameter less than 0.15 mm. Thus, the rollers of the present invention have been proven to be anomalous-noise-suppressed rollers having excellent durability.

In contrast, the foamed rollers of Comparative Examples 1 to 6 produced from a large proportion of cross-linking agent exhibited somewhat poor durability and, in some cases, generated anomalous noise, although the rollers exhibited small permanent compressive strain. The roller of Comparative Example 7, which differs from that of Example 1 in terms of thickness, generated anomalous noise. The foamed rollers of Comparative Examples 8 and 9 produced from a small proportion of cross-linking agent were not preferred, in that the rollers exhibited large permanent compressive strain, although the rollers had excellent durability and generated no noise.

As described hereinabove, by controlling the proportion of the cross-linking agent employed for producing polyurethane, a thick anomalous-noise-suppressed roller having excellent durability can be produced.

## Claims

1. An anomalous-noise-suppressed roller comprising polyurethane foam, wherein
the polyurethane foam is produced from a prepolymer derived from a caprolactone diol; a chain-extender formed of a 2-functional diol; and a cross-linking agent formed of a short-chain polyol having three or more functionalities;
the cross-linking agent is employed in an amount of 10% by mass or more and less than 20% by mass, with respect to the total amount of the chain-extender and the cross-linking agent;
the polyurethane foam exhibits a permanent compressive strain, as determined under 25% compression at 70°C for 22 hours, of 20% or less, and an Asker C hardness of 60 to 70°; and
the roller has a thickness of 4 mm or less.

2. An anomalous-noise-suppressed roller as described in claim 1, which is molded through mechanical frothing.

## Patentansprüche

1. Walze, die abnormale Geräusche unterdrückt und Polyurethanschaum enthält, wobei
der Polyurethanschaum aus einem von einem Caprolactondiol abgeleiteten Präpolymer, einem aus einem zweifunktionalen Diol gebildeten Kettenverlängerer und einem Vernetzungsmittel hergestellt ist, das aus einem drei oder mehr Funktionalitäten aufweisenden kurzkettigen Polyol gebildet ist,
das Vernetzungsmittel in einer Menge von mindestens 10 Massen-% und weniger als 20 Massen-%, bezogen auf die Gesamtmasse des Kettenverlängerers und des Vernetzungsmittels, eingesetzt ist,
der Polyurethanschaum eine unter 25%-iger Kompression bei 70°C für 22 Stunden festgestellte permanente Stauchung von höchstens 20% und eine Asker-C-Härte von 60 bis 70° aufweist, und
die Walze eine Dicke von höchstens 4 mm aufweist.

2. Abnormale Geräusche unterdrückende Walze nach Anspruch 1, die durch mechanisches Schäumen geformt ist.

## Revendications

1. Rouleau en mousse de polyuréthane pour supprimer un bruit anormal, dans lequel
la mousse de polyuréthane est produite à partir un prépolymère dérivé d'un caprolactone diol ; d'un extenseur de chaîne constitué par un diol bifonctionnel ; et d'un agent de réticulation constitué par un polyol à chaîne courte à trois fonctionnalités ou plus ;
l'agent de réticulation est employé à raison de 10 % en masse ou plus et moins de 20 % en masse, par rapport à la quantité totale d'extenseur de chaîne et d'agent de réticulation ;
la mousse de polyuréthane présente une déformation permanente après compression de 20 % ou moins, déterminée sous compression de 25 % à 70°C pendant 22 heure, et, à 70°C, une dureté Asker C de 60 ; et
le rouleau a une épaisseur de 4 mm ou moins.

2. Rouleau selon la revendication 1 pour supprimer un bruit anormal, moulé par moussage mécanique par battage.
